Europäisches Patentamt

European Patent Office

Office européen des brevets

(11) Publication number : **0 454 612 A1**

# (12) EUROPEAN PATENT APPLICATION

(21) Application number : 91500038.4

(51) Int. Cl.⁵ : **B60Q 1/44**

(22) Date of filing : 25.04.91

(30) Priority : 25.04.90 ES 9001172

(43) Date of publication of application :
30.10.91 Bulletin 91/44

(84) Designated Contracting States :
AT BE CH DE DK FR GB GR IT LI LU NL SE

(71) Applicant : Lagoa Monteagudo, Jesus
Fernando
Cervantes 17
E-15002 La Coruna (ES)

(72) Inventor : Lagoa Monteagudo, Jesus
Fernando
Cervantes 17
E-15002 La Coruna (ES)

(74) Representative : Garcia Cabrerizo, Francisco
OFICINA GARCIA CABRERIZO S.L. Vitruvio 23
E-28006 Madrid (ES)

(54) Signalling systems for automobile vehicles.

(57)    The present invention is about improvements introduced in signalling systems for automobile vehicles improvements which consist of inserting between the brake lights (1) and the corresponding switch (2) which is activated by a brake pedal, an oscillatory circuit (3) which creates an intermittent effect in the brake lights (1) when the pedal (2) is being activated, thus increasing the signalling effect of the above mentioned lights.

FIG.-1

EP 0 454 612 A1

## Object of the Invention

The present device is about a series of improvements introduced in the signalling systems used by automobile vehicles, such as lorries, buses, private cars and motorcycles, more specifically in their "brake" lights. These improvements aim to achieve a higher efficiency in the corresponding signalling.

## Background of the Invention

As is generally known, a couple of rear lights are used in automobile vehicles as signals whicht light up when the brake pedal is activated, in order to inform the vehicle circulating immediately behind it of the manoeuvre being carried out, i. e., braking.

However, in many cases this signal is not enough, either because of low environmental lighting, or because of a distraction on the part of the driver of the vehicle to which the indication is directed, or because of both reasons.

## Description of the Invention

The improvements suggested by the device have been designed to solve this problem absolutely satisfactorily, and are based mainly on the introduction of a supply circuit for the "brake" lights of the vehicle, as a means to interrupt said supply sequentially and thus achieve a flashing effect which attracts the attention of the person circulating behind the braking vehicle more efficiently and which, therefore, means a better signalling of this manoeuvre.

In practice these improvements are obtained by inserting an oscillatory circuit in the brake lights' supply circuit. Apart from the unavoidable oscillator, this oscillatory circuit is made up of a meter and a stabilizer that act upon a switching relay of the brading circuit, so that in case of a supposed failure in this circuit, the relay remains closed and the signalling system works in a conventional manner.

It must also be added that, according to another of the invention's features, the purpose of the above mentioned meter is to establish a previously defined cycle of intermittence, at the end of which the relay goes off and the brake lights stay continuously on for as long as the brakes pedal is being activated.

From this basic structure it is viable to introduce a commutator to annul the device, to introduce an optic warning signal which informs of the operation of the system, and to introduce a device to check the operation of the brake lights.

## Description of Drawings

There follows a complete description of the above mentioned improvements introduced in signalling systems of automobile vehicles, referring to the drawings attached. These figures represent with an indicative and not limitative character, a preferable way of production liable to suffer any changes of detail which do not alter basically its essential characteristics.

In these drawings:

Figure 1 shows a diagram of a brake signalling system for automobile vehicles, manufactured according to the improvements which are the object of the present invention.

Figure 2 shows the same circuit as in the previous figure, this time provided with a switch to annul the intermittence circuit and a control light for said circuit.

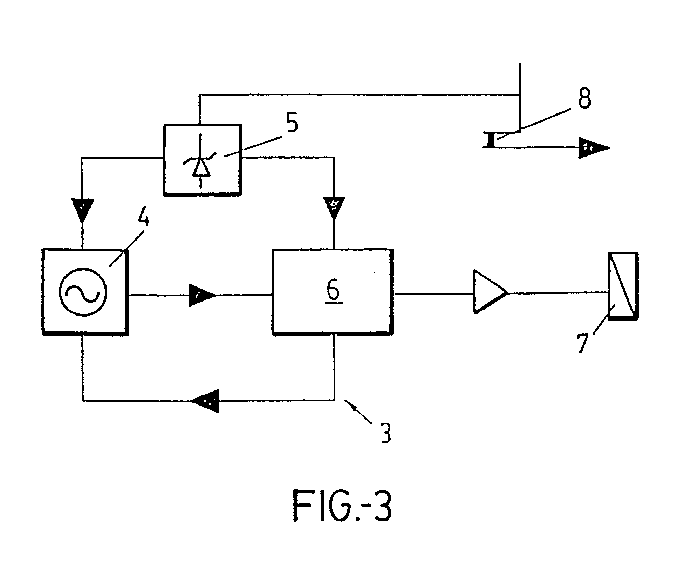

Finally, figure 3 shows a detail of the oscillatory circuit.

## Preferable Embodiment of the Invention

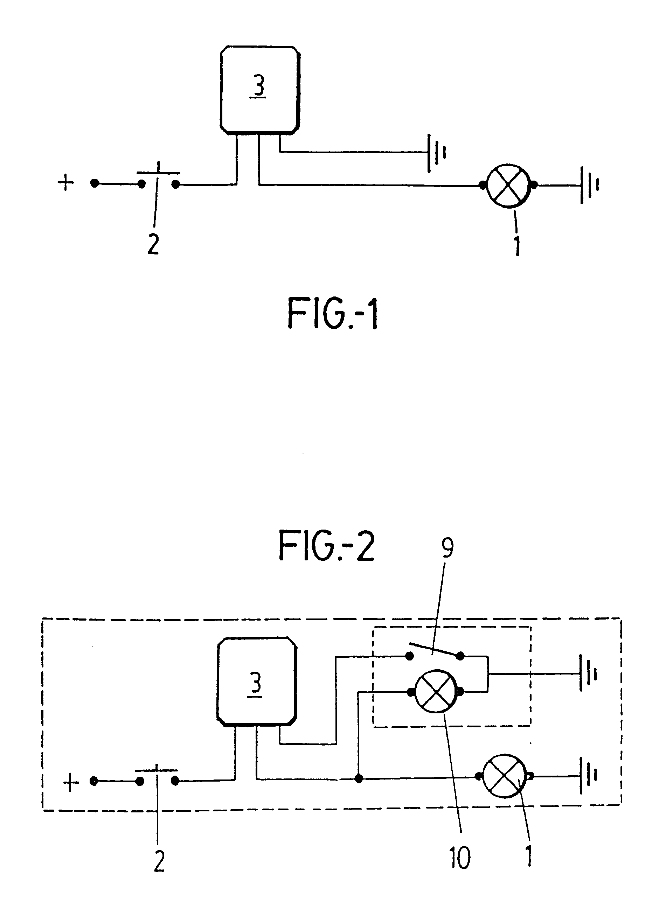

Observing these figures and especially figure 1, it can be seen how the improvements announced here consist of inserting in the supply circuit of the brake lights (1), more concretely between these lights and the switch (2) activated by the brake pedal, an oscillatory circuit (3) which appears represented in detail in figure 3 and which is made up of an oscillator (4), an stabiliser (5) and a meter (6), which activate a relay (7) so that, when in a rest position, this relay tends to keep closed the supply circuit of the lights (1), that is to say, that the contact (8) of intermittent action of the lights (1) tends to remain closed, and it opens when the relay (7) is excited.

According to this structure, when the brake pedal is activated and the switch (2) closes, the oscillator (4) is excited and there is an intermittent effect in the signal, which is maintained for the programmed time, controlled by the meter (6). At the end of this effect, and as has been already mentioned, the intermittence stops and the brake lights (1) remain constantly light up as long as the brake pedal is activated.

From the basic structure and following the variation shown in figure 2, it is possible to introduce in the circuit a switch (9) to annul the operability of the oscillatory circuit (3), so that the signalling system as a whole works in a conventional manner. It is also possible to introduce an optical warning device (10) to control the operation of the oscillatory system itself.

## Claims

1. - Improvements introduced in signalling systems for automobile vehicles - more concretely in systems that indicate braking manoeuvres - which essentially consist of inserting in the supply circuit of the brake lights, between these lights and the switch activated by the brake pedal, an oscillatory circuit which establishes an intermittent supply for the already mentioned brake lights; the system has the peciliarity that the oscillator, which is assisted by a stabilizer, is also aided by a meter which programmes the amplitude of the intermittence cycle in such a manner that, at the end of that cycle, the brake lights remain on continuously and indefinitely for as long as the brake pedal switch remains closed.

2.- Improvements introduced in signalling systems for automobile vehicles, according to claim 1, characterized in that the oscillatory circuit acts in cooperation with a relay which tends to remain permanently in position to close the supply circuit of the brake lights, so that this circuit has continuity when, for any reason, the oscillatory circuit becomes inoperative.

3.- Improvements introduced in signalling systems for automobile vehicles, according to previous claims, characterized in that the oscillatory circuit is optionally assisted by a light or an optical warning device that indicates its operation, as well as a switch to annul it.

FIG.-1

FIG.-2

FIG.-3

EP 0 454 612 A1

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3317896 (LENTFER)<br>* the whole document * | 1-3 | B60Q1/44 |
| A | US-A-3596244 (BERNHARDT)<br>* figure 1 * | 3 | |

TECHNICAL FIELDS
SEARCHED (Int. Cl.5 )

B60Q

The present search report has been drawn up for all claims

| Place of search | Date of completion of the search | Examiner |
|---|---|---|
| THE HAGUE | 24 JUNE 1991 | ONILLON C.G.A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)